(19) Europäisches Patentamt
European Patent Office
Office européen des brevets

(11) **EP 3 975 081 A1**

(12) **EUROPEAN PATENT APPLICATION**

(43) Date of publication:
**30.03.2022 Bulletin 2022/13**

(21) Application number: **20306095.9**

(22) Date of filing: **25.09.2020**

(51) International Patent Classification (IPC):
**G06Q 10/04** (2012.01)

(52) Cooperative Patent Classification (CPC):
**G06Q 10/047**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TOTAL SE**
**92400 Courbevoie (FR)**

(72) Inventor: **ALLYBOKUS, Zaid**
**75015 PARIS (FR)**

(74) Representative: **Lavoix**
**2, place d'Estienne d'Orves**
**75441 Paris Cedex 09 (FR)**

(54) **METHOD FOR DETERMINING A DELIVERY SOLUTION TO PICK-UP AND DELIVER PACKS BY A FLEET OF VEHICLES, ASSOCIATED ELECTRONIC DETERMINING DEVICE AND COMPUTER PRODUCT PROGRAM**

(57)　A method for determining a delivery solution to pick-up and deliver packs by a fleet of vehicles in a predetermined environment, the delivery solution comprising a set of vehicle features, a set of energy source features, and a set of paths;
the method comprising the following steps:
- acquiring (110) an environment graph representing pick-up and delivery locations, a set of vehicle constraints and a set of operational constraints;
- determining (120) at least one path for at least one slave problem, said slave problem comprising determining at least one path for a vehicle to pick-up and deliver packs while respecting the acquired vehicle constraints; and
- determining (130) the delivery solution from a master problem and the determined path(s) for at least one slave problem, said master problem comprising optimizing a predetermined criterion while respecting the acquired operational constraints.

FIG.2

**Description**

The present invention concerns a method for determining a delivery solution to pick-up and deliver packs by a fleet of vehicles in a predetermined environment.

The present invention also concerns an electronic determining device and a computer product program, associated to this method.

The study of delivering solution presents an important challenge for delivering companies. Indeed, with the emergence of internet shopping and home delivery, determining a path for each vehicle of a fleet of vehicles to deliver packs efficiently has become a classic issue.

In this context, the wording "efficiently" refers to a way to deliver packs which optimizes a predetermined criterion. Such a criterion might for example be: the time to deliver all packs or the total length of the delivery path of each vehicle or all of the vehicles of the fleet.

It is known in the art to determine the delivery solution by solving independent optimization problems.

The wording "optimization problem" refers to a mathematical problem consisting in the optimization of a criterion by making varying at least one variable. The optimization problem might also comprise some constraints that at least one of the variable has to respect.

In the art, it is known to determine firstly a set of available resources such as a set of vehicles to be used for delivery, and secondly an optimal path for each of said vehicles in the predetermined environment.

The determination of the available resources is then often based on the vehicle features without considering the path that said vehicle would use.

Consequently, the determined delivery solution, comprising here the set of available resources and the path of each vehicle, is generally suboptimal.

The wording "suboptimal" refers here to the existence of a delivery solution which permits to optimize more said criterion than the suboptimal delivery solution.

Thus, the known methods do not provide always an optimal delivery solution.

One aim of the invention is to provide a method for determining a delivery solution, improving the existing methods.

To this end, the subject-matter of the invention is a method for determining a delivery solution to pick-up and deliver packs by a fleet of vehicles in a predetermined environment, the delivery solution comprising a set of vehicle features relatives to vehicles to be used for delivery, a set of energy source features relative to energy sources to be used for supplying the vehicles, and a set of paths relative to paths in the predetermined environment to be used by the vehicles for delivery;

the method comprising the following steps:

- acquiring an environment graph representing pick-up and delivery locations in the predetermined environment, a set of vehicle constraints and a set of operational constraints;
- determining at least one path for at least one slave problem, said slave problem comprising determining at least one path for a vehicle to pick-up and deliver packs while respecting the acquired vehicle constraints; and
- determining the delivery solution from a master problem and the determined path(s) for at least one slave problem, said master problem comprising optimizing a predetermined criterion while respecting the acquired operational constraints.

The method of the invention may also comprise one or more of the following feature(s), taken in isolation, or according to any one of any technically feasible combination:

- the environment graph comprises:

  - a set of nodes, each node representing a location in the predetermined environment; and
  - a set of edges, each edge representing a route between two nodes;
    each pick-up or delivery location corresponding to a node in the environment graph,

- the set of vehicle constraints comprises for each vehicle or each vehicle's type:

  - a first group of vehicle constraints to ensure that the packs are picked-up, and then delivered;
  - a second group of vehicle constraints to ensure that embedded freight stays lower than a freight capacity of said vehicle or said vehicle's type, for all time;
  - a third group of vehicle constraints to ensure that pick-up and deliver nodes of each pack are reached; and
  - a fourth group of vehicle constraints to ensure that a current energy of the vehicle remains, for all time, inclusively between zero and an energy capacity of said vehicle,

- the set of operational constraints comprises:

  - a first group of operational constraints to ensure that each pack is either picked-up and delivered, or denied; and
  - a second group of operational constraints to ensure that the number of waiting vehicles or vehicles being supplied in energy, at an energy source is lower than a waiting capacity or a supplying capacity of the energy source,

- the acquiring step further comprises acquiring a set of pack constraints comprising for each pack a first time window for picking-up said pack and a second time window for delivering said pack;
the or each path for a vehicle being determined by the corresponding slave problem while further respecting the set of pack constraints,
- the fleet of vehicle is predetermined;

  - during the step of determining at least one path, the vehicle constraints of each slave problem being respective to one vehicle of the predetermined fleet of vehicle; and
  - during the step of determining the delivery solution, each vehicle of the predetermined fleet being either not included or included once in the vehicle(s) to be used for delivery,

- the fleet of vehicle is to be determined;

  - the vehicles to be used for delivery being chosen among a set of vehicle's type, each vehicle's type comprising distinct vehicle constraints;
  - during the step of determining at least one path, the vehicle constraints of each slave problem being respective to one vehicle's type of the set of vehicle's type,
  - during the step of determining the delivery solution, each vehicle's type being either not included, included once, or included several times, in the vehicle(s) to be used for delivery,

- the step of determining at least one path and the step of determining the delivery solution are iterated several times,
- each slave problem comprises determining the path by optimizing a quantity including: a path quantifier and at least one feature depending on the delivery solution; said feature being initialized with predetermined value(s) for the first iteration,
- the or each feature depending on the delivery solution comprises:

  - a first parameter respective to each pack, quantifying a first penalty of rejecting said pack;
  - a second parameter respective to each node and each time, quantifying a second penalty of having vehicle(s) waiting at said node ($n$) and said time; and
  - a third parameter respective to each node and each time, quantifying third penalty of having vehicle(s) being supplied at said node and said time ,

- the path quantifier comprises:

  - a fourth penalty respective to the vehicle or the vehicle's type of the slave problem;
  - a fifth penalty based on a length of the path used by said vehicle or said vehicle's type;
  - a sixth penalty of embedding freight in said vehicle or said vehicle's type; and
  - a seventh penalty of having said vehicle or said vehicle's type waiting;
    said slave problem preferably depending linearly on each penalty,

- the predetermined criterion of the master problem depends linearly on:

  - the path quantifier of each slave problem;
  - an eighth penalty of installing an energy source;
  - a ninth penalty of installing a supplying port(s); and
  - a tenth penalty of denying the pack,

- the vehicles are electric vehicles and the energy sources are electric supplying infrastructures.

The invention also concerns a computer program product having computer-executable instructions which, when carried out on a computer system, perform the method for determining, as defined above.

The present invention also concerns an electronic determining device comprising technical means adapted to implement the method for determining, as defined above.

The invention will be better understood, upon reading of the following description, taken solely as an example, and made in reference to the following drawing, in which:

- Figure 1 is schematic view of an electronic determining device, according to the invention;
- Figure 2 is a general flowchart of steps of a method for determining a delivery solution according to the invention, the method being implemented by the electronic determining device of Figure 1;
- Figure 3 is a schematic view of an environment graph, acquired by the device of Figure 1, the environment graph comprising pick-up and delivery nodes;
- Figure 4 is a schematic view of all possible paths in the environment graph of Figure 3; and
- Figure 5 is a schematic representation of a delivery solution determined by the method according to the invention from the paths of Figure 4.

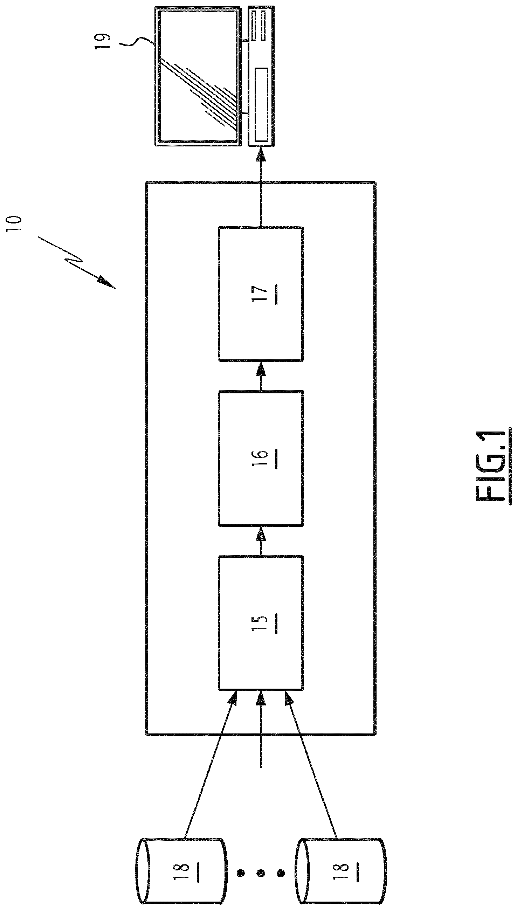

An electronic determining device 10 illustrated on Figure 1 is configured for implementing a method for determining a delivery solution to pick up and deliver packs c by a fleet of vehicles in a predetermined environment.

A delivery solution is understood hereafter as comprising:

- at least one vehicle, among a list of feasible vehicles, to be used for picking up and delivering packs c in the predetermined environment;
- a list of packs c to be picked up and delivered;
- a path $p$, for each vehicle to be used for delivery, in the predetermined environment;
- a location, in the predetermined environment, of the or each energy source to be installed to supply each vehicle; and
- a number of supplying port(s) to be installed on each energy source.

According to a preferred embodiment of the invention, the fleet of vehicles is composed of electrical automobile vehicles. According to this preferred embodiment, each energy source is an electrical supplying infrastructure and each supplying port is an electrical socket on which any of said electrical vehicles can be plugged to be supplied in electricity.

Alternatively, the fleet of vehicles is composed of fuel automobile vehicles. Each energy source is hence a fuel station and each supplying port is a fuel pump.

The fleet of vehicles is optionally composed of autonomous vehicles.

According to a preferred embodiment of the invention, the predetermined environment is an urban environment or a suburban environment. According to another embodiment, the predetermined environment is a mixed environment including urban and suburban portions.

In reference to figure 1, the electronic determining device 10 comprises an acquisition module 15, a processing module 16 and an output module 17.

According to an embodiment, these modules assume the form of software programs stored one or more storing means (such as a hard drive or FLASH drive) and implemented by one or several processors, RAM memory(eis) and other computer components known *per se.* These components may be included in a same computer or different computers/servers. In this last case, the computers/servers may be connected by a local or global network.

Additionally or alternatively, at least some of these modules 15, 16, 17 assume the form, at least partially, of an independent electronic component, as for example a Field-Programmable Gate Array (FPGA) component.

The acquisition module 15 is configured to acquire a list of pack feature(s), an environment graph representing pick-up and delivery locations in the predetermined environment, a list of feasible vehicles to be used for delivery, a set of pack constraints, a set of vehicle constraints and a set of operational constraints.

For this purpose, the acquisition module 15 may be connected to one or several databases 18 able to stock this data. For example, the acquisition module 15 may be connected to these databases 18 via a local or global network. These databases 18 can be provided by a same supplier or different suppliers.

The processing module 16 is configured to process the acquired data to determine the delivery solution to pick-up and deliver packs, by carrying out determining steps of the method according to the invention, as it will be explained below.

The output module 17 is configured to transmit the determined delivery solution to one or several users and/or one or several external databases. For example, the output module 17 can be connected to a computer screen 19 to provide the determined delivery solution to a single user. In variant, the output module 17 can be configured to provide only a part of the delivery solution to a user and/or a screen or any other external device. For example, such an external device may be arranged in one of the vehicles of the fleet. In this case, the output module 17 is configured to provide for example only the path and/or other data of the delivery solution relative to this vehicle.

The list of pack features comprises a set of packs *C* including packs *c.* The list of pack features comprises, for each pack *c,* an associated freight $h^c$. The wording "freight" is understood here as a quantifier of a respective pack *c.* Such quantifier is for example the weight of said pack *c* and/or dimensions of this pack.

The environment graph comprises a set of nodes $N_G$ including nodes *n* and a set of edges $E_H$ in which, each edge links two nodes *n.* Each node *n* of the environment graph represents a location in the predetermined environment. Among the nodes *n* of the environment graph, some nodes *n* represent a pick-up location and/or a delivery location of each pack *c.*

Each edge of the environment graph defines a path between two nodes *n.* Each edge represents for example, a road or a succession of roads between the locations of two nodes *n.* Each edge comprises optionally a quantification of the length of the path between the two linked nodes *n.* Such length refers for example to a distance between the two linked nodes *n.*

Alternatively, the length of a path refers to a duration to browse said path.

The list of feasible vehicles comprises one or several vehicle model references, also called vehicle's type. For each vehicle, several features are available. The list of feasible vehicles comprises for example a freight capacity $\kappa$ of each vehicle's type and an energy capacity $\gamma$ of each vehicle's type.

In a preferred embodiment, the fleet of vehicles is unknown. In other words, each vehicle's type from the list of feasible vehicles is selectable either no time, one time, or several times to form the vehicle(s) to be used for delivery.

According to another embodiment the fleet of vehicle is predetermined. In other words, the list of feasible vehicles comprises a plurality of vehicle, each of them being either not selected or selected once.

The set of pack constraints specifies for each pack a picking-up time window and a delivery time window.

The constraints of the set of pack constraints are for example formulated for each considered vehicle's type, also called hereafter as considered vehicle, as follows:

$$s_t^{pc} = a^{pc} \quad \forall\, t \geq t_{sup}^0(c) \quad \forall\, c \in C; \tag{1}$$

$$d_t^{pc} = a^{pc} \quad \forall\, t \geq t_{sup}^\infty(c) \quad \forall\, c \in C; \tag{2}$$

and

$$s_{t_{inf}^0(c)-1}^{pc} = 0, \quad d_{t_{inf}^\infty(c)-1}^{pc} = 0 \quad \forall\, c \in C; \tag{3}$$

where:

- *p* corresponds to the path used by a vehicle;
- *t* corresponds to the time;
- $s_t^{pc}$ is binary valued, equal to 1 if, at time *t,* the vehicle, assigned to the path *p,* picks up the pack *c,* and is called picking value;
- $d_t^{pc}$ is binary valued, equal to 1 if, at time *t,* the vehicle assigned to the path *p* delivers the pack *c,* and is called delivering value.
- $a^{pc}$ is binary valued equal to 1 if the vehicle routed on the path *p,* picks up and delivers the pack *c,* and is called the association variable;
- $t_{inf}^0(c)$ corresponds to an inferior terminal of the picking-up time window of pack *c;*
- $t_{sup}^0(c)$ corresponds to a superior terminal of the picking-up time window of pack *c;*
- $t_{inf}^\infty(c)$ corresponds to an inferior terminal of the delivery time window of pack *c;*
- $t_{sup}^\infty(c)$ corresponds to a superior terminal of the delivery time window of pack *c;*

The wording "binary valued" specifies that the corresponding variable or value is only either equal to 0 or 1.

The equation (1) ensures for each pack *c* that is picked-up and delivered by a vehicle using the path *p* ($a^{pc}$ =

1), that such picking-up happens before the superior terminal of the picking-up time window $t_{sup}^{0}(c)$ of said pack *c*.

Similarly, for the delivering value $d_{t}^{pc}$, the equation (2) ensures for each pack *c* that is picked-up and delivered by a vehicle using the path p ($a^{pc}$ = 1), that such delivery happens before the superior terminal of the delivery time window $t_{sup}^{\infty}(c)$ of said pack *c*.

The equation (3), combined with the equations (4) and (5) detailed hereafter, ensures, for each pack *c,* that neither the picking-up nor the delivering happens respectively before the inferior terminal of the picking-up time window $t_{inf}^{0}(c),$ and before the inferior terminal of the delivery time window $t_{inf}^{\infty}(c).$ This is performed by respectively enforcing the picking value $s_{t}^{pc}$ and the delivering value $d_{t}^{pc}$, at the time preceding inferior terminals of respective time windows, to zero.

The set of vehicle constraints comprises constraints that are applicable to each vehicle in its individuality. The set of vehicle constraints comprises for each considered vehicle four groups of vehicle constraints respective of the considered vehicle.

The first group of vehicle constraints comprises constraints to ensure that each pack is firstly picked-up and then delivered.

The constraints of the first group of vehicle constraints are for example formulated as follows:

$$s_{t+1}^{pc} \geq s_{t}^{pc} \quad \forall\, t \leq t_{max} \quad \forall\, c \in C; \tag{4}$$

$$d_{t+1}^{pc} \geq d_{t}^{pc} \quad \forall\, t \leq t_{max} \quad \forall\, c \in C; \tag{5}$$

and

$$s_{t}^{pc} \geq d_{t}^{pc} \quad \forall\, t \leq t_{max} \quad \forall\, c \in C; \tag{6}$$

where:

- $t_{max}$ corresponds to a predetermined time limit to pick-up and deliver packs *c*.

The equation (4) ensures that the picking value $s_{t}^{pc}$ is increasing. The picking value $s_{t}^{pc}$ is initialized to 0 since the pack *c* is not yet picked-up by the considered vehicle. If, at the time *t,* the pack *c* is picked-up by the considered vehicle, the picking value $s_{t}^{pc}$ goes to 1. Then, combining the fact that the picking value $s_{t}^{pc}$ is increasing due to the equation (4), and binary valued, the picking value of $s_{t}^{pc}$ remains equal to 1 until the time *t* reaches the time limit $t_{max}$.

The equation (5) ensures that the delivering value $d_{t}^{pc}$ is increasing as well. The same reasoning as developed for the picking value $s_{t}^{pc}$, is applicable to the delivering value $d_{t}^{pc}$.

The equation (6) ensures, considering a respective pack *c,* that the considered vehicle picks it up before delivering it. More specifically, since the picking value $s_{t}^{pc}$ and the delivering value $d_{t}^{pc}$ are binary valued and increasing, the equation (6) ensures that the picking value $s_{t}^{pc}$ goes to 1 before the delivering value $d_{t}^{pc}$ goes to 1, if applicable. As a contraposition, a pack *c* that is not picked by the considered vehicle cannot be delivered since, as long as the picking value $s_{t}^{pc}$ stays equal to 0, the delivering value $d_{t}^{pc}$ remains equal to 0 as well.

The second group of vehicle constraints comprises constraints to ensure that freight in the considered vehicle is lower than the freight capacity $\kappa$ of the considered vehicle.

The freight capacity $\kappa$ is adapted to the freight quantifier of the set of packs *C* to be comparable with each pack *c*.

The constraints of the second group of vehicle constraints are for example formulated as follows:

$$\sum_{c \in C}\left(s_t^{pc} - d_t^{pc}\right)h^c \leq \kappa \quad \forall\, t \leq t_{max}; \qquad (7)$$

where:

- $\sum_{c \in C}$ corresponds to a sum over each pack *c* of the set of packs *C*.

By combining the equation (7) and the equations (4) to (6):

- when a respective pack *c* is not or not yet picked, the corresponding picking $s_t^{pc}$ and delivering $d_t^{pc}$ values are equal to 0, their difference is hence equal to 0, and the freight $h^c$ of said pack *c* is not comprised in the total freight, also called embedded freight, in the considered vehicle;

- when a respective pack *c* is picked but not yet delivered, the corresponding picking value $s_t^{pc}$ is equal to 1 while the corresponding delivering value $d_t^{pc}$ is equal to 0, their difference is hence equal to 1, and the freight $h^c$ of said pack *c* is comprised in the total freight in the considered vehicle; and

- when a respective pack *c* is picked-up and delivered, the corresponding picking $s_t^{pc}$ and delivering $d_t^{pc}$ values are equal to 1, their difference is hence equal to 0, and the freight $h^c$ of said pack c is not comprised in the total freight in the considered vehicle.

The third group of vehicle constraints comprises constraints to ensure that picking-up nodes *n* and delivery nodes *n* of each considered pack *c* are reached.

The constraints of the third group of vehicle constraints are for example formulated as follows:

$$s_{t+1}^{pc} - s_t^{pc} \leq x_{(t,s(c)),(t+1,s(c))}^{p} + x_{[(t,s(c)),(t+1,s(c))]_+}^{p} \quad \forall\, t \leq t_{max} \quad \forall\, c \in C;\, \text{and} \qquad (8)$$

$$d_{t+1}^{pc} - d_t^{pc} \leq x_{(t,d(c)),(t+1,d(c))}^{p} + x_{[(t,d(c)),(t+1,d(c))]_+}^{p} \quad \forall\, t \leq t_{max} \quad \forall\, c \in C; \qquad (9)$$

where:

- *s(c)* corresponds to the pick-up location of the pack *c;*
- *d(c)* corresponds to the delivery location of the pack *c;*
- *((t,n),(t',m))* corresponds to the edge between the nodes *n* and *m,* browsed between times *t* and *t';*
- $x_{((t,n),(t',m))}^{p}$ is binary valued, equal to 1 if the vehicle crosses the edge between the node *n* and the node *m,* between the time *t* and *t',* and is called browsing variable;

- $x_{(t,s(c)),(t+1,s(c))}^{p}$ is binary valued, equal to 1 if the vehicle is waiting at the pick-up location *(s(c))* of the pack *c* between times *t* and *t* + 1, and is called first waiting variable;

- $x_{[(t,s(c)),(t+1,s(c))]_+}^{p}$ is binary valued, equal to 1 if the vehicle is charging the pack *c* between the time *t* and the time *t* + 1, at the pick-up location *(s(c)),* and is called charging variable;

- $x_{(t,d(c)),(t+1,d(c))}^{p}$ is binary valued, equal to 1 if the vehicle is waiting at the delivery location *d(c)* of the pack *c* between times *t* and *t* + 1, and is called second waiting variable;

- $x_{[(t,d(c)),(t+1,d(c))]_+}^{p}$ is binary valued, equal to 1 if the vehicle is discharging the pack *c* between the time *t* and the time $t + 1$, at the delivery location $d(c)$, and is called discharging variable.

The equation (8) ensures, for each pack $c$, that the pick-up happens either after a waiting or a charging time, at the pick-up location $s(c)$. More specifically, if the pack $c$ is picked-up at time $t + 1$, according to equation (8), either the first waiting variable $x^p_{(t,s(c)),(t+1,s(c))}$ or the charging variable $x^p_{[(t,s(c)),(t+1,s(c))]_+}$ is equal to 1 between said time $t + 1$ and the preceding time $t$. A skilled-person would notice here that equation (8) ensures that both the first waiting variable $x^p_{(t,s(c)),(t+1,s(c))}$ and the charging variable $x^p_{[(t,s(c)),(t+1,s(c))]_+}$ cannot be equal to 1 simultaneously since the difference between the picking value $s^{pc}_{t+1}$ at the time $t + 1$ and the picking value $s^{pc}_t$ at the preceding time $t$ is binary valued due to equations (4).

The equation (9) ensures, for each pack $c$, that the delivery happens either after waiting or after discharging, at the pick location d(c). The same reasoning as for the picking value $s^{pc}_t$ above, is applicable for the delivering value $d^{pc}_t$.

The fourth group of vehicle constraints comprises constraints to ensure that an energy of the considered vehicle remains, for all time, inclusively between zero and the energy capacity $\gamma$ of the considered vehicle.

The constraints of the fourth group of vehicle constraints are for example formulated as follow:

$$x^p_{(t,n),(t',m)} E_{t,n,m} \leq e^p_t \quad \forall\, (t,n), \left(t',m\right) \in E_H, n \neq m; \qquad (10)$$

$$e^p_t \leq e^p_{t-1} - \Sigma_{((t',m),(t,n)) \in E_H, n \neq m} E_{t',m,n} x^p_{(t',m),(t,n)} + \Sigma_{n \in N_G} \sigma_n x^p_{[(t-1,n)(t,n)]_+} \quad \forall\, t \leq t_{\max} ;$$

$$(11)$$

and

$$e^p_t \leq \gamma \quad \forall t \leq t_{\max}; \qquad (12)$$

where:

- $E_{t,n,m}$ corresponds to a required browsing energy to move from node $n$, to node $m$, at time $t$;
- $e^p_t$ corresponds to the current energy of the vehicle at time $t$;
- $\Sigma_{((t',m),(t,n)) \in E_H, n \neq m}$ corresponds to a sum over all browsed edges implying a motion of the vehicle;
- $\sigma_n$ corresponds to a rate of energy supplied at the node $n$; and
- $x^p_{[(t-1,n)(t,n)]_+}$ is binary valued, equal to 1 if the vehicle is being supplied in energy at the node $n$ between times $t - 1$ and $t$, and is called supplied variable.

The equation (10) ensures that the considered vehicle has enough energy to browse the edge between a respective first node $n$ and a respective second node $m$ between a respective first time $t$ and a respective second time $t'$. More particularly, if at time $t$, an edge requires more required browsing energy $E_{n,m,t}$ that the current energy $e_t$ of the considered vehicle, the browsing variable $x^p_{((t,n),(t',m))}$ is forced to be equal to 0, which implies that the considered vehicle does not browse said edge $((t,n), (t',m))$ at said time $t$.

The equation (11) is an energy flow conservation equation. The equation (11) ensures that between two times $t - 1$ and $t$, no energy disappears. More particularly, it ensures that the current energy $e_t$ of the considered vehicle at time $t$ is equal to the current energy of the considered vehicle $e_{t-1}$ at the preceding time $t - 1$, minus an energy spent in

browsing edges $\sum_{((t',m),(t,n))\in E_H, n\neq m} E_{t',m,n} x^p_{(t',m),(t,n)}$ between the preceding time $t - 1$ and the time $t$, plus an energy brought by being supplied in energy $\sum_{n\in N_G} \sigma_n x^p_{[(t-1,n)(t,n)]_+}$ between the preceding time $t - 1$ and the time $t$.

The browsing energy $\sum_{((t',m),(t,n))\in E_H, n\neq m} E_{t',m,n} x^p_{(t',m),(t,n)}$, between the preceding time $t - 1$ and the time $t$, corresponds to the sum, over each browsed edge between said times, of the required browsing energy $E_{t,n,m}$.

The energy brought by being supplied in energy $\sum_{n\in N_G} \sigma_n x^p_{[(t-1,n)(t,n)]_+}$, between the preceding time $t - 1$ and the time $t$, corresponds to the sum, over all nodes $n$ in the environment graph, of all energy rate $\sigma_n$ supplied to the considered vehicle at each said node $n$ between said times $t - 1$ and $t$.

The equation (12) ensures, at each time $t$, that the current energy $e_t$ of the considered vehicle is lower than or equal to the energy capacity $\gamma$ of said considered vehicle.

The set of operational constraints comprises constraints that are applicable to the vehicles to be used for delivery as a community. The set of operational constraints comprises for each considered vehicle two groups of operational constraints.

The first group of operational constraints comprises constraints to ensure that each pack $c$ is either picked and delivered, or denied. The wording "denied" refers here to a pack $c$ that is neither picked-up nor delivered.

The constraints of the first group of operational constraints are for example formulated as follows:

$$r^c + \sum_{p\in P} \lambda^p a^{pc} = 1 \quad \forall c \in C; \qquad (13)$$

where:

- $r^c$ is binary valued, equal to 1 if the pack $c$ is denied, and is called the denial variable;
- $\sum_{p\in P}$ corresponds to the sum over all paths $p$ in a set of path $P$; and
- $\lambda^p$ is binary valued, equal to 1 if the path $p$ is chosen, and is called the path choice variable.

With equation (13), the denial variable $r^c$ is equal to 1 for each pack $c$, for which it does not exist a path $p$ such that both the path choice variable $\lambda^p$ and the association variable $a^{pc}$ are equal to 1. In other words, for each pack $c$ which is not associated to a path $p$ ($a^{pc} = 0$) or for which path $p$ that is not chosen ($\lambda^p = 0$), the denial variable $r^c$ is equal to 1.

The second group of operational constraints comprises constraints to ensure that the number of waiting vehicles, respectively of vehicles being supplied in energy, at an energy source is lower than a waiting capacity $w_n$, respectively than a supplying capacity $u_n$.

The constraints of the second group of operational constraints are for example formulated as follows:

$$\sum_{p\in P} \lambda^p x^p_{(t,n),(t+1,n)} \leq w_n \quad \forall (t,n) \in N_H; \qquad (14)$$

$$\sum_{p\in P} \lambda^p x^p_{[(t,n),(t+1,n)]_+} \leq b_n \quad \forall (t,n) \in N_H; \qquad (15)$$

$$b_n \leq u_n, \quad b_n \leq y_n u_n \quad \forall n \in N_G; \qquad (16)$$

and

$$\lambda^p, r^c, b_n, y_n \geq 0; \qquad (17)$$

where:

- $x^p_{((t,n),(t+1,n))}$ is binary valued, equal to 1 if the vehicle, associated to the path $p$, waits at the node $n$ between times $t$ and $t + 1$, and is called the third waiting variable;
- $N_H$ is a set of all couples comprising a time $t$ and a node $n$;
- $x^p_{[(t,n),(t+1,n)]_+}$ is binary valued, equal to 1 if the vehicle associated to the path $p$ is being supplied in energy at the node $n$, between times $t$ and $t + 1$, and is called third waiting variable;
- $b_n$ corresponds to a number of supplying port(s) installed at the node $n$; and
- $y_n$ is a binary variable, equal to 1 if an energy source is installed at the node $n$, and is called installation variable.

The equation (14) ensures, for each node $n$, that the number of waiting vehicles is lower than the waiting capacity $w_n$ of said node $n$.

The equations (15) and (16) ensure, for each node $n$, that the number of vehicles being supplied in energy is lower that the corresponding number of supplying port(s) $b_n$ which is lower than the supplying capacity $u_n$ of node $n$. Said number of supplying port(s) $b_n$ is equal to 0 if no energy source is installed at node $n$ ($y_n = 0$).

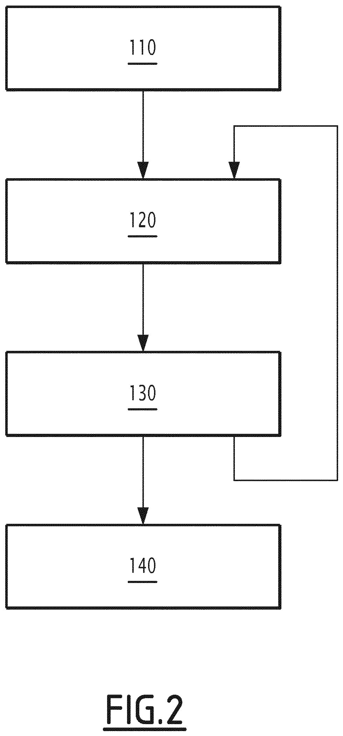

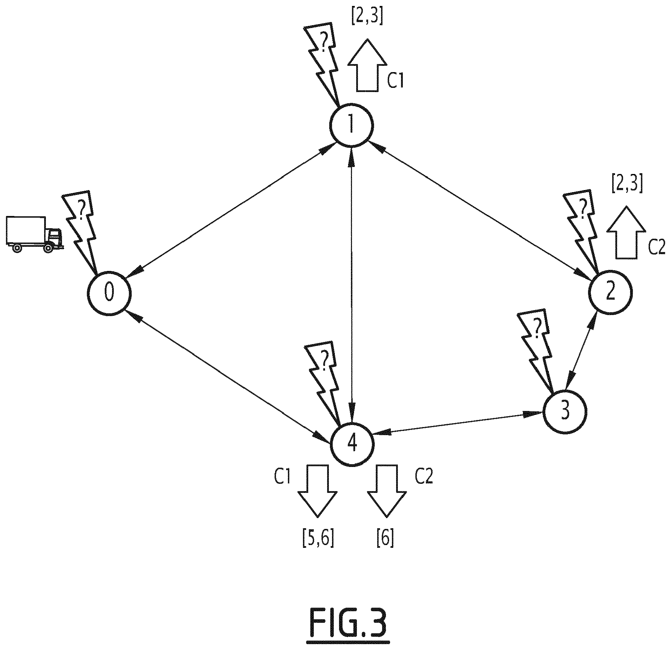

The method for determining the delivery solution is now explained in reference to Figure 2 presenting a flow chart of its steps and in reference to Figures 3 to 5 illustrating the application of the method on an example.

During step 110, the acquisition module 15 acquires the list of pack features, the environment graph, the list of feasible vehicles, the set pack constraints, the set of vehicle constraints, and the set of operational constraints.

During the first determining step 120, the electronic determining device 10 determines for each vehicle's type in the list of feasible vehicles, a respective path in the environment graph in which at least one respective pack c is picked up and delivered.

For this purpose, the processing module 16 solves, for each vehicle in the list of feasible vehicles, an optimization problem called slave problem. Each slave problem comprising a quantity to be optimized over first variables, and slave constraints.

In this context optimizing a quantity is understood, here and hereafter, as minimizing said quantity. A skilled-person would notice that a similar reasoning is applicable with another meaning of optimizing such as: maximizing said quantity. To obtain the same result by maximizing the quantity, the skilled-person only requires to add a minus sign to the quantity developed below.

A skilled-person would notice that the quantity is also named objective function or cost function.

For each slave problem, the quantity includes a path quantifier ($\Gamma^p$) of the considered vehicle and at least one feature depending on the delivery solution.

The feature depending on the delivery solution comprises:

- a first parameter $\alpha_c$ respective to each pack $c$, quantifying a first penalty of denying a pack $c$;
- a second parameter $\mu_{t,n}$ respective to each node $n$ and each time $t$, quantifying a second penalty of having vehicle(s) waiting at said node $n$ and said time $t$; and
- a third parameter $v_{t,n}$ respective to each node $n$ and each time $t$, quantifying third penalty of having vehicle(s) being supplied at said node $n$ and said time $t$.

At this point the first $\alpha_c$, second $\mu_{t,n}$, and third $v_{t,n}$ parameters are initialized for example each to 0.

For example, the quantity is the following:

$$\Gamma^p + \sum_{c \in C} a^{pc} \alpha_c + \sum_{(t,n) \in E_H} x^p_{((t,n),(t+1,n))} \mu_{t,n} + x^p_{[(t,n),(+1,n)]_+} v_{t,n} \qquad (18)$$

with:

$$\Gamma^p = \Lambda^{\gamma,\kappa} + \sum_{((t',m),(t,n)) \in E_H, n \neq m} T x^p_{(t',m),(t,n)} + \sum_{(t,n) \in N_h} \left\{ K x^p_{[(t,n),(+1,n)]_+} + \right.$$
$$\left. W x^p_{((t,n),(t+1,n))} \right\}; (19)$$

where:

- $\Lambda^{\gamma,\kappa}$ corresponds to a fourth penalty depending on the considered vehicle;
- $T$ corresponds to a fifth penalty of having the considered vehicle browsing edges;
- $K$ corresponds to a sixth penalty of charging the considered vehicle with packs; and

- *W* corresponds to a seventh penalty of having the considered vehicle waiting.

Each of the fourth $\Lambda^{\gamma,\kappa}$, fifth *T*, sixth *K*, and seventh *W* penalties is a positive number.

The fifth *T* and the seventh W penalties permit to shorten the path *p* as possible which would lead for example, to a faster delivery.

The sixth *K* penalty permits to increase the lifespan of the considered vehicle by not charging it too much.

The skilled-person would notice that different tunings of the fourth $\Lambda^{\gamma,\kappa}$, the fifth *T*, the sixth *K,* and the seventh *W* penalties, would lead to different paths *p*, depending on which penalty is considered as the most important. The fourth $\Lambda^{\gamma,\kappa}$, the fifth *T,* the sixth *K,* and the seventh *W* penalties are predetermined before the method according to the invention.

The first variables of the slave problem are: the association variable $a^{pc}$, and a set of behavior variables corresponding to decisions of the considered vehicle at each time *t*. Said set of behavior variables comprises: the browsing variable $x^p_{((t,n),(t',m))}$, the first waiting variable $x^p_{(t,s(c)),(t+1,s(c))}$, the charging variable $x^p_{[(t,s(c)),(t+1,s(c))]_+}$, the second waiting variable $x^p_{(t,d(c)),(t+1,d(c))}$, the discharging variable $x^p_{[(t,d(c)),(t+1,d(c))]_+}$, the supplied variable and the third waiting variable $x^p_{[(t-1,n)(t,n)]_+}$.

The slave constraints are: the acquired vehicle constraints, and the acquired pack constraints which are adapted to the vehicle's type respective to the slave problem.

A skilled-person would notice that each slave problem is linear. In other words, neither the quantity to be optimized nor any of the constraint depends non-linearly on the first variables.

To solve the slave problem, the processing module 16 determines a solution of each slave problem by using a linear solver. Such solvers are known in themselves. For example, each slave problem may be solved using one of the following solvers: "CPLEX"; "GUROBI"; "GLPK"; "CBC"; "SCS"; and "ECOS". A solving method, of each of these solvers, is based on iterations, in which calculation is proceeded. Such iteration is called hereinafter a solving iteration.

Still during the first determining step 120, the processing module 16 receives from the solver: an optimized quantity and some optimized first variables.

The optimized quantity corresponds, in the case where optimized is understood as minimized, to the minimum that the quantity is able to reach, by making varying the first variables while respecting the slave constraints.

The optimized first variables correspond to respective variables of the first variables that make the quantity reaching the optimized quantity.

From the optimized first variables, the electronic determining device 10 determines the path p by concatenating the corresponding behavior variables at each time *t*.

For example, if the optimized first variables comprise $x^p_{((1,0),(2,1))}=1$ and $x^p_{((2,1),(3,1))}=1,$ the determined path comprises being at node *n* equal to 0 at time *t* equal to 1, then moving to node *n* equal to 1 and reach it at time *t* equal to 2, and then stay at the node *n* equal to 1 until time *t* equals to 3.

In the case where the fleet of vehicles is predetermined, one slave problem for each vehicle of the list of feasible vehicles is solved by the same method as described above. In this case, the fourth penalty $\Lambda^{\gamma,\kappa}$ is interpreted as a penalty for using the respective vehicle comprising the energy capacity $\gamma$ and the freight capacity $\kappa$. In this case, the other steps are not changed.

The processing module 16 then goes to the second determining step 130 in which it determines the delivery solution from the determined paths of each slave problem.

For this purpose, the processing module 16 solves another optimization problem called master problem. The master problem comprises a predetermined criterion to be optimized over second variables, and master constraints.

The predetermined criterion depends on:

- the number of vehicles to be used for delivery and their respective path *p*,
- the number of energy source to install, their location, and the number of supplying port(s) that they each comprises; and
- the number of denied pack *p*.

For example, the predetermined criterion is the following:

$$\sum_{p\in P} \Gamma^p \lambda^p + \sum_{N_G} \{I_n y_n + B_n b_n\} + \sum_{c\in C} R_c r^c \; ; \qquad (17)$$

where:

- $I_n$ corresponds to an eighth penalty of installing an energy source located at node $n$;
- $B_n$ corresponds to a ninth penalty of installing a supplying port located at node $n$; and
- $R_c$ corresponds to a tenth penalty of denying the corresponding pack $c$.

The second variables comprises: the path choice variable $\lambda^p$, the installation variable $y^n$, the denial variable $r^c$ and the number of supplying port(s) installed $b_n$.

The master constraints correspond to the acquired operational constraints.

A skilled-person would notice that the master problem is linear. It is hence solvable by one of the aforementioned linear solvers.

Thus, during the second determining step 130, the processing module 16 sends the master problem to one of the aforementioned linear solver.

Then, the processing module 16 receives from said linear solver an optimized criterion, optimized second variables, and the first $\alpha_c$, second $\mu_{t,n}$, and third $v_{t,n}$ parameters.

Similarly to the optimized quantity, the optimized criterion corresponds, in the case where optimized is understood as minimized, to the minimum reachable by the predetermined criterion by making varying the second variables while respecting the master constraints.

Similarly again, the optimized second variables corresponds to respective variable of each second variable that makes the predetermined criterion reaching the optimized criterion.

The first $\alpha_c$, second $\mu_{t,n}$, and third $v_{t,n}$ parameters correspond to optimized dual variable of the master problem.

Dual variables are defined referring to a dual of the master problem. The dual of the master problem, also called dual problem, is an optimization problem which consists in maximizing a dual criterion, while respective dual constraints.

The dual criterion and the dual constraints are based on the predetermined criterion and the master constraints.

The dual variables are made based on the constraints of the master problem. As a consequence, the first parameter $\alpha_c$ corresponds to the operational constraint in equation (13), the second parameter $\mu_{t,n}$ corresponds to the operational constraint in equation (14) and the third parameter $v_{t,n}$ corresponds to the operation constraint in equation (15).

The optimized dual variable corresponds to the value of the dual variables that permits to the dual criterion to reach its maximum.

In the context of the master problem, both the master problem and the dual problem are equivalent. The maximum of the dual criterion is equal to the optimized criterion.

Practically, any of the aforementioned linear solvers provides simultaneously the optimized second variables and the optimized dual variables.

Still during the second determining step 130, the processing module 16 determines the delivery solution as follows:

- the location(s) where the energy source(s) has(ve) to be installed corresponds to node(s) $n$, for which the installation variable $y^n$ is equal to 1;
- the supplying port(s) to install on each installation corresponds, for each node $n$, to the number of supplying port(s) $b_n$;
- the vehicles to be used for supplying correspond, for each path choice variable $\lambda^p$ equal to 1, to the vehicle corresponding to the slave problem wherein the path $p$ associated to said path choice variable $\lambda^p$;
- the path $p$ of each vehicle to be used is the path $p$ determined by the slave problem associated to said vehicle.

After a first iteration of the first 120 and the second 130 determining steps, the processing module 16 returns optionnally to the first determining step 120, to determine a new path $p$ for each slave problem by replacing the first $\alpha_c$, second $\mu_{t,n}$, and third $v_{t,n}$ parameters by the ones determined during the second determining step 130, and then reiterates again the second determining step. Then, during the step 130, the set of paths $P$, overwich the path choice variables $\lambda^p$ are chosen to optimize the predetermined criterion, comprises each path determined during all the preceeding steps 120.

The first 120 and the second 130 determining steps are thus iterated several times. More particularly, a slave problem shuts down when its reduced cost becomes non-negative. The reduced cost of a slave problem corresponds to a value of the quantity, obtained by the solver solving the slave problem, at a certain solving iteration. When all slave problems are shutdown, or when steps 120 and 130 have been more iterated than a predefined maximum iteration budget, the step's iterations stop.

In the example of figures 3, 4, and 5, the environment graph as acquired during the acquiring step 110, is represented on Figure 3.

On the environment graph of Figure 3, the lighting with a respective question mark represents a potential location of an energy source.

The environment graph comprises 5 nodes referenced from 0 to 4. For simplicity, in this example, each edge of the graph has the same length which is by definition equal to 1 unit of distance and browsed in 1 unit of time, and has the same required browsing energy $E_{t,n,m}$ equal to 1 unit of energy. On the environment graph a first pack $c_1$ has to be picked-up at the node 1 between the time 2 and the time 3, and delivered at node 4 between the time 5 and the time 6. On the environment graph a second pack $c_2$ has to be picked-up at the node 2 between the time 2 and the time 3, and delivered at node 4 at the time 6.

The list of pack features acquired during the acquiring step 110 comprises a freight $h^c$ equal to 1 kg for the first pack $c_1$ and a freight equal to 5 kg for the second pack $c_2$.

The list of feasible vehicles comprises one vehicle's type for which the freight capacity if equal to 50 kg and the energy capacity is equal to 4 energy units.

An initial location of the vehicle is the node 0 as represented on the figure 3.

In the set of operational constraints, the supplying rate $\sigma_n$, on each node, is equal to 2. In other words, when being supplied in energy, the considered vehicle earns 2 energy unit per unit of time.

The charging delay and discharging delay of each pack is equal to 0. Consequently, the charging variable $x^p_{[(t,s(c)),(t+1,s(c))]_+}$ and the discharging variable $x^p_{[(t,d(c)),(t+1,d(c))]_+}$ are always equal to 0.

During the first determining unit 120, the electronic determining device 120 solved the slave problem formulated for the unique vehicle's type.

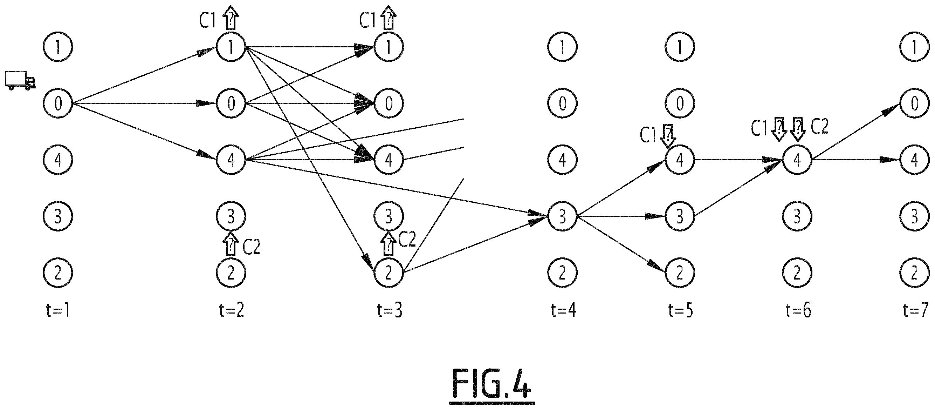

The figure 4 represents all the possible path that are feasible in the graph without considering the pack and vehicle constraints.

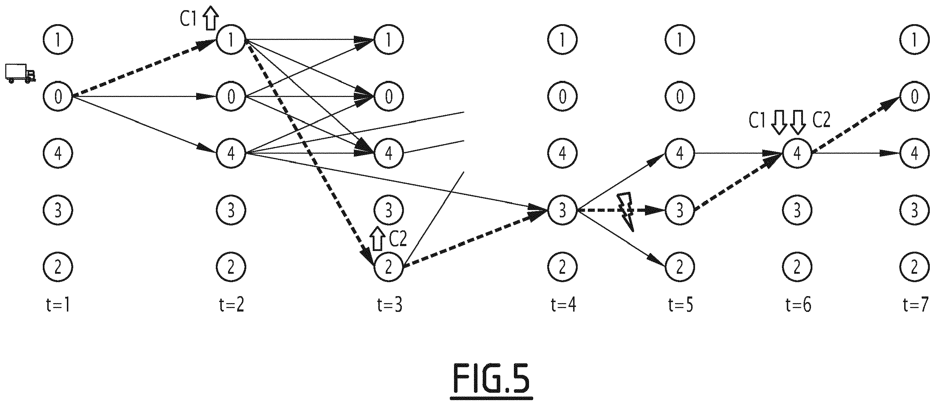

The determined path $p$ for the slave problem is represented by the dotted arrow on the figure 5. This path $p$ consists in the following successive steps:

- starting from the node 0 at the time 1;
- reaching the node 1 at time 2 and picking up instantaneously the first pack $c_1$;
- reaching the node 2 at time 3 and picking up instantaneously the second pack $c_2$;
- reaching the node 3 at time 4;
- being supplied in energy at the node 3 until time 5;
- reaching the node 4 at time 6 and delivering the first $c_1$ and the second $c_2$ packs During the second determining step 130, the delivery solution is determined.

Since only one path $p$ has been determined and picks-up and delivers all packs, this path $p$ is chosen.

The determined delivery solution comprises:

- the fact that all packs are picked-up and delivered
- the determined path $p$ developed above;
- the installation of one energy source at the node 3;
- the installation of one supplying port on said energy source.

The method according to the invention may further comprise an application step 140.

During this step 140, the output module 17 provides for example the whole delivery solution to a single user.

In variant, the output module 17 may provide at least a part of the delivery solutions to different users. In this case, the output module 17 sends the determined path $p$ and the corresponding list of picked-up and delivered packs $c$ to each corresponding vehicle to be used.

These elements are for example sent to a routing calculator of each vehicle to deduce and provide to a vehicle's driver the routing instructions. Such deduction is known in the art.

In the case of autonomous vehicle, these respective elements are sent to the routing calculator of each autonomous vehicle. The routing calculator calculates the routing instructions from these elements. The autonomous vehicle then implements the routing instructions by its autonomous pilot. Said calculator and autonomous pilots are known in the art.

The method according to the invention thus improves the determining of the delivery solution by determining in two interconnected problems, every features of the delivery solution.

In addition, the consideration, in the delivery solution, of the energy source(s) and the supplying port(s) makes the delivery solution more complete and realistic.

In addition, having the required browsing energy $E_{t,n,m}$ depending on the time and not only a departure node $n$ and an arrival node $m$, permits to fit more precisely the reality and permits to represent a variation of the automobile traffic according to the time $t$.

Moreover, linear aspect of both each slave problem and the master problem permits to ensure that the used solver would find a solution to said problem. This hence ensures that the method according to the invention determines the delivery solution.

**Claims**

1. A method for determining a delivery solution to pick-up and deliver packs ($c$) by a fleet of vehicles in a predetermined environment, the delivery solution comprising a set of vehicle features relatives to vehicles to be used for delivery, a set of energy source features relative to energy sources to be used for supplying the vehicles, and a set of paths ($P$) relative to paths ($p$) in the predetermined environment to be used by the vehicles for delivery; the method comprising the following steps:

   - acquiring (110) an environment graph representing pick-up ($s(c)$) and delivery ($d(c)$) locations in the predetermined environment, a set of vehicle constraints and a set of operational constraints;
   - determining (120) at least one path ($p$) for at least one slave problem, said slave problem comprising determining at least one path ($p$) for a vehicle to pick-up and deliver packs ($c$) while respecting the acquired vehicle constraints; and
   - determining (130) the delivery solution from a master problem and the determined path(s) ($p$) for at least one slave problem, said master problem comprising optimizing a predetermined criterion while respecting the acquired operational constraints.

2. The method according to claim 1, wherein the environment graph comprises:

   - a set ($N_G$) of nodes ($n$), each node representing a location in the predetermined environment; and
   - a set ($E_H$) of edges, each edge representing a route between two nodes ($n$);
   each pick-up ($s(c)$) or delivery ($d(c)$) location corresponding to a node ($n$) in the environment graph.

3. The method according to claim 1 or 2, wherein the set of vehicle constraints comprises for each vehicle or each vehicle's type:

   - a first group of vehicle constraints to ensure that the packs ($c$) are picked-up, and then delivered;
   - a second group of vehicle constraints to ensure that embedded freight stays lower than a freight capacity ($\kappa$) of said vehicle or said vehicle's type, for all time ($t$);
   - a third group of vehicle constraints to ensure that pick-up and deliver nodes ($n$) of each pack ($c$) are reached; and
   - a fourth group of vehicle constraints to ensure that a current energy ($e_t$) of the vehicle remains, for all time, inclusively between zero and an energy capacity ($\gamma$) of said vehicle.

4. The method according to any one of the preceding claims, wherein the set of operational constraints comprises:

   - a first group of operational constraints to ensure that each pack ($c$) is either picked-up and delivered, or denied; and
   - a second group of operational constraints to ensure that the number of waiting vehicles or vehicles being supplied in energy, at an energy source is lower than a waiting capacity ($w_n$) or a supplying capacity ($u_n$) of the energy source.

5. The method according to any one of the preceding claims, wherein the acquiring step (110) further comprises acquiring a set of pack constraints comprising for each pack ($c$) a first time window for picking-up said pack ($c$) and a second time window for delivering said pack ($c$); the or each path for a vehicle being determined by the corresponding slave problem while further respecting the set of pack constraints.

6. The method according to any one of the preceding claims, wherein;

- the fleet of vehicle is predetermined;
- during the step (120) of determining at least one path (*p*), the vehicle constraints of each slave problem being respective to one vehicle of the predetermined fleet of vehicle; and
- during the step (130) of determining the delivery solution, each vehicle of the predetermined fleet being either not included or included once in the vehicle(s) to be used for delivery.

7. The method according to any one of claims 1 to 5, wherein;

- the fleet of vehicle is to be determined;
- the vehicles to be used for delivery being chosen among a set of vehicle's type, each vehicle's type comprising distinct vehicle constraints;
- during the step (120) of determining at least one path, the vehicle constraints of each slave problem being respective to one vehicle's type of the set of vehicle's type,
- during the step (130) of determining the delivery solution, each vehicle's type being either not included, included once, or included several times, in the vehicle(s) to be used for delivery.

8. The method according to any one of the preceding claims, wherein the step (120) of determining at least one path and the step of determining the delivery solution are iterated several times.

9. The method according to any one of the preceding claims, wherein each slave problem comprises determining the path by optimizing a quantity including: a path quantifier ($\Gamma^p$) and at least one feature depending on the delivery solution;
said feature being initialized with predetermined value(s) for the first iteration.

10. The method according to claim 9, wherein the or each feature depending on the delivery solution comprises:

- a first parameter ($\alpha_c$) respective to each pack (*c*), quantifying a first penalty of rejecting said pack (*c*);
- a second parameter ($\mu_{t,n}$) respective to each node (*n*) and each time (*t*), quantifying a second penalty of having vehicle(s) waiting at said node (*n*) and said time (*t*); and
- a third parameter ($v_{t,n}$) respective to each node (*n*) and each time (*t*), quantifying third penalty of having vehicle(s) being supplied at said node (*n*) and said time (*t*).

11. The method according to claim 9 or 10, wherein the path quantifier ($\Gamma^p$) comprises:

- a fourth penalty ($\Lambda^{\gamma,\kappa}$) respective to the vehicle or the vehicle's type of the slave problem;
- a fifth penalty (*T*) based on a length of the path (*p*) used by said vehicle or said vehicle's type;
- a sixth penalty (*K*) of embedding freight in said vehicle or said vehicle's type; and
- a seventh penalty (*W*) of having said vehicle or said vehicle's type waiting;
said slave problem preferably depending linearly on each penalty.

12. The method according to any one of claims 9 to 11, wherein the predetermined criterion of the master problem depends linearly on:

- the path quantifier ($\Gamma^p$) of each slave problem;
- an eighth penalty ($I_n$) of installing an energy source;
- a ninth penalty ($B_n$) of installing a supplying port(s); and
- a tenth penalty of denying the pack (*c*).

13. The method according to any one of the preceding claim, wherein the vehicles are electric vehicles and the energy sources are electric supplying infrastructures.

14. Computer program product having computer-executable instructions which, when carried out on a computer system, perform the method according to anyone of the preceding claims.

15. An electronic determining device comprising technical means adapted to implement the method for determining according to any claims 1 to 13.

FIG.1

110

120

130

140

FIG.2

[2,3]

C1

[2,3]

C2

C1

C2

[5,6]

[6]

# FIG.3

FIG.4

FIG.5

Europäisches
Patentamt

European
Patent Office

Office européen
des brevets

## EUROPEAN SEARCH REPORT

Application Number

EP 20 30 6095

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/079738 A1 (RIDEOS [US]) 25 April 2019 (2019-04-25) * claim 1; figure 16 * ----- | 1-15 | INV. G06Q10/04 |
| X | WO 2010/129419 A2 (EXXONMOBIL RES & ENG CO [US]; KOCIS GARY R [US] ET AL.) 11 November 2010 (2010-11-11) * claim 1; figure 3 * ----- | 1-15 | |
| X | US 2017/352003 A1 (BERTOLI FRANCESCO [AU] ET AL) 7 December 2017 (2017-12-07) * claim 1; figure 3 * ----- | 1-15 | |

TECHNICAL FIELDS
SEARCHED      (IPC)

G06Q

The present search report has been drawn up for all claims

| Place of search | Date of completion of the search | Examiner |
|---|---|---|
| Munich | 12 March 2021 | May, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 30 6095

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2021

| Patent document cited in search report | | | Publication date | Patent family member(s) | | | Publication date |
|---|---|---|---|---|---|---|---|
| WO 2019079738 | A1 | | 25-04-2019 | CN | 111247540 | A | 05-06-2020 |
| | | | | EP | 3698299 | A1 | 26-08-2020 |
| | | | | US | 2019120640 | A1 | 25-04-2019 |
| | | | | US | 2020041296 | A1 | 06-02-2020 |
| | | | | US | 2020080856 | A1 | 12-03-2020 |
| | | | | US | 2020182639 | A1 | 11-06-2020 |
| | | | | US | 2020182640 | A1 | 11-06-2020 |
| | | | | WO | 2019079738 | A1 | 25-04-2019 |
| WO 2010129419 | A2 | | 11-11-2010 | AU | 2010246213 | A1 | 24-11-2011 |
| | | | | CA | 2777502 | A1 | 11-11-2010 |
| | | | | CN | 102422313 | A | 18-04-2012 |
| | | | | EP | 2430595 | A2 | 21-03-2012 |
| | | | | JP | 2012526326 | A | 25-10-2012 |
| | | | | SG | 175116 | A1 | 28-11-2011 |
| | | | | US | 2010287073 | A1 | 11-11-2010 |
| | | | | WO | 2010129419 | A2 | 11-11-2010 |
| US 2017352003 | A1 | | 07-12-2017 | AU | 2017203827 | A1 | 21-12-2017 |
| | | | | US | 2017352003 | A1 | 07-12-2017 |

EPO FORM P0459

For more details about this annex : see Official Journal of the European Patent Office, No. 12/82